# EUROPEAN PATENT SPECIFICATION

(11) **EP 1 545 229 B1**
(45) Date of publication and mention of the grant of the patent: **25.06.2008**
(21) Application number: 02761410.6
(22) Date of filing: 16.08.2002
(51) Int. Cl.: A23G 3/00, A23G 9/00, A23G 9/04

(54) **FROZEN DESSERT COMPOSITIONS WITH STARCH HYDROLYSATE**
GEFRORENE DESSERTPRODUKTE MIT STûRKEHYDROLYSAT
COMPOSITION DE DESSERT GLACE AVEC HYDROLISAT D'AMIDON

(43) Date of publication of application: 29.06.2005
(73) Proprietor: GENERAL MILLS MARKETING, INC., Minneapolis, MN 55440 (US)
(72) Inventor: ROSENWALD, Diane, R., Plymouth, MN 55441 (US); TAMOSCHAT, Anja, Brooklyn Park, MN 55443 (US)
(74) Representative: Kuhnen & Wacker
(86) International application number: PCT/US2002/026233
(87) International publication number: WO 2004/016094

(56) References cited:
- WO-A-02/080693
- CA-A1- 2 029 250
- US-A- 4 376 791
- US-A- 4 717 579
- US-A- 5 523 108
- US-B1- 6 379 736
- ANONYMOUS: "Product Information; Satin Sweet 65% High Maltose Corn Syrup"

## Description

The invention is directed to frozen dessert compositions containing a starch hydrolysate that includes a mixture of dextrose, maltose, maltotriose, and polysaccharides.

### BACKGROUND OF THE INVENTION

Frozen dessert compositions such as ice cream, ice milk, gelato, milk shakes, frozen yogurt, sherbet, pudding, frozen custard, and sorbet have wide consumer appeal. To deliver a pleasing frozen dessert composition to consumers, it is desirable that the appealing texture and taste that the composition has when first produced is retained for extended periods of time. For example, it is desirable that the frozen dessert composition undergoes minimal changes resulting from heat shock during shipping, handling, and storage.

Heat shock arises from exposure to temperature variations that cause partial thawing and refreezing of the composition or from exposure to elevated temperatures over an extended period of time. Because some of the water in frozen dessert compositions is not frozen at typical storage temperatures, heat shock can affect the composition at temperatures well below the freezing point of pure water.

Heat shock promotes ice crystal growth that can impart a gritty texture to the frozen dessert composition. Additionally, heat shock can cause the aqueous phase to separate from the air and fat phase. Such changes can make the appearance and texture of the frozen dessert composition unacceptable and detract from the general quality of the composition.

Various formulations have been developed to improve the heat shock resistance of frozen dessert compositions. One approach has been the use of stabilizing gums in the frozen dessert composition. Examples of stabilizing gums that have traditionally been added to frozen dessert compositions include gum acacia, guar gum, locust bean gum, carrageenan, xanthan gum, alginate, pectin, and the like. Microcrystalline cellulose and carboxymethlycellulose are often used in combination with stabilizing gums to modify the mouth feel of the composition. These stabilizers function by reducing the diffusion of water molecules and, thereby, minimizing the formation of large ice crystals.

The amount of stabilizing gums needed for effective heat shock resistance, however, can result in a frozen dessert composition that has an unacceptable slick or gummy mouth feeL Although stabilizing gums are typically derived from naturally produced substances, consumers tend to perceive a composition that contains such gums as having artificial rather than natural ingredients. The gums also tend to make the frozen dessert composition harder. Hardness can affect other properties of the frozen dessert composition such as, for example, ease of extrusion into containers and scooping.

Another approach to improving heat shock resistance has been to include partially hydrolyzed starch in the frozen dessert composition formulation. For example, some of the sugar in a frozen dessert composition can be replaced with corn syrup. Typically, the corn syrup has a dextrose equivalent value of about 36 to about 42. However, starch hydrolysates tend to be more effective as stabilizers if the dextrose equivalent value is lower. A lower dextrose equivalent value corresponds to a starch hydrolysate having a higher molecular weight.

More recently a partially hydrolyzed starch, as described in U.S. Patent 5,112,626 (Huang, et al.), having a dextrose equivalent value of 18 to 26 was found useful in frozen dessert compositions. A partially hydrolyzed starch having a DE value of 18 to 26 can further be characterized as having a maltose to dextrose ratio of less than 4:1, a polysaccharide to maltose ratio of less than 1.5:1, and a maltose to polysaccharides ratio of at least 9:1. However, these high molecular weight partially hydrolyzed starches can be difficult to dissolve at high concentrations and have a tendency to precipitate out of the aqueous phase of the frozen dessert composition over time if the concentration of the partially hydrolyzed starch is too high. Thus, even though the frozen dessert composition has no large ice crystals formed during extended storage and is heat shock resistant, the composition can seem chalky due to precipitation of the high molecular weight starch hydrolysate.

Additionally, use of a high molecular weight starch hydrolysate will increase the firmness of the frozen dessert composition. Compositions with high levels of high molecular weight starch hydrolysates will be undesirably firm.
CA 2,029,250 discloses a flavoured frozen snack composition. US 4,376,791 discloses fructose containing frozen dessert products. The product information sheet of the firm Cargill Sweeteners discloses the "Satin Sweet ® 65 %", a high maltose corn syrup.

### BRIEF SUMMARY OF THE INVENTION

In its principle product aspect, the present invention provides frozen dessert compositions containing a starch hydrolysate that includes a mixture of dextrose, maltose, maltotriose, and polysaccharides. The starch hydrolysate solids include dextrose in an amount less than about 5%, maltose in an amount of about 20 to 60%, maltotriose in an amount of about 5 to about 25%, and polysaccharides in an amount of about 20 to about 60% based on the weight of the starch hydrolysate solids. The improved starch hydrolysate can further be characterized as having a maltose to dextrose ratio of at least 13:1, a maltose to maltotriose ratio of 2.5:1, and a maltose to polysaccharides ratio of 1:1. Inclusion of this starch hydrolysate into the frozen desserts surprisingly imparts to the frozen dessert a desirable non-chalky taste while maintaining and improving heat shock resistance characteristics and minimal ice crystal growth in the finished frozen dessert composition. The starch hydrolysate also imparts a softer texture to the frozen dessert composition.

The starch hydrolysate can be prepared by mixing one or more corn syrups or corn syrup solids having a dextrose equivalent of about 20 to about 30 with one or more high maltose corn syrups or high maltose corn syrup solids. The ratio of corn syrup having a DE value of about 20 to about 30 to high maltose corn syrup is about 1.1:1 to about 1.3:1. One aspect of the invention provides a frozen dessert composition containing high maltose corn syrup solids in an amount of about 2% to about 20%, corn syrup solids having a dextrose equivalent value of about 20 to about 30 in amount of about 2% to about 20%, sucrose in an amount of about 5 to about 20 %, nonfat milk solids in an amount of about 5% to about 20%, and fat in an amount of about 0.5% to about 20%. The total solids are typically about 35% to about 60 %.

In another aspect of one and the same invention, liquid dessert blends are provided that are useful intermediate products in the preparation of the finished frozen dessert products herein.

The invention also provides methods for preparing the frozen dessert compositions of the invention.

### DETAILED DESCRIPTION OF THE INVENTION

The invention provides frozen dessert compositions and methods of making such compositions. In particular, the invention provides frozen dessert compositions containing a starch hydrolysate that includes a mixture of dextrose, maltose, maltotriose, and polysaccharides. The frozen dessert compositions can typically be stored for up to one year at -15°F (-26°C) without extensive formation of large ice crystals that impart a gritty texture. Additionally, the frozen dessert compositions can typically be stored under normal storage conditions without extensive precipitation of the starch hydrolysate from the aqueous phase that can impart a chalky taste to the composition. That is, a desirable taste and texture can be maintained in the frozen dessert composition upon long-term storage.

Throughout the specification and claims, percentages are by weight and temperatures in degrees Fahrenheit unless otherwise indicated.

As used herein, the phrase "starch hydrolysate" refers to a carbohydrate composition that includes dextrose, maltose, maltotriose, and polysaccharides.

As used herein, the term "dextrose" refers to a monosaccharide also known as D-glucose. The terms "maltose" and "maltotriose" refer to saccharides having two and three units of glucose, respectively. That is, maltose is a disaccharide and maltotriose is a trisaccharide. As used herein, the term "polysaccharide" refers to a saccharide containing four or more monosaccharides joined together.

The starch hydrolysate can be a liquid, a solid, or a mixture thereof. The percent solids of a starch hydrolysate liquid typically are about 70% to about 82% percent. The solids of a starch hydrolysate solid are about 92% to about 99%. The percent solids of a mixture of solid and liquid starch hydrolysate are about 79% to about 92%. An embodiment for use herein is a starch hydrolysate mixture having a ratio of liquid starch hydrolysate to solid starch hydrolysate of 2:1, most preferred 3:1. The solids in the starch hydrolysate can act as a binder for the water present in the frozen dessert composition and can improve the ability of the frozen dessert composition to be heat shock resistant.

The present invention provides an improvement over the products described and comprising a partially hydrolyzed starch disclosed in U.S. Patent No. 5,112,626 entitled "Aerated frozen dessert compositions and products "(issued May 12, 1992 to Huang , et al. and incorporated herein by reference) can be characterized by a DE (dextrose equivalent) value, whereas the starch hydrolysate of the present invention can not adequately be characterized by a DE value, as will be explained forthcoming. Thus, the partially hydrolyzed starch described in the '626 can not be used herein without modification by addition of a second starch hydrolyzate blend as further described below

Traditionally, DE (dextrose equivalent) can be measured by reacting a corn syrup with a reducing agent. The degree of the reaction indicates the level of reducing sugars present in the corn syrup. Common corn syrups can generally be measured based upon the degree of polymerization (dp) which can then determine the DE value.

In the case of high maltose corn syrup, the syrup is made by using an enzyme to selectively cut a part the starch molecule. Since the enzyme processed high maltose syrup results in different ingredient characteristics, DE is an ineffective measurement of the syrup. High maltose corn syrup has smaller quantities of dextrose, and larger quantities of maltose in comparison to corn syrups which can be characterized by a DE value. As dextrose is a major contributor in determining DE value, high maltose corn syrup can not effectively be characterized by such a value.

As used herein, the phrases "heat shock resistant" or "heat shock resistance" refer to the ability of a frozen dessert composition to withstand changes in texture due to temperature variations that cause partial thawing and refreezing of the composition or from exposure to elevated temperatures over an extended period of time. A frozen dessert composition that is not heat shock resistant is more likely to develop a gritty texture during long-term storage.

The amount of starch hydrolysate solids in a frozen dessert composition of the invention is typically about 5% to about 25% based on the weight of the frozen dessert composition. In some embodiments, the frozen dessert composition contains about 8% to about 18% starch hydrolysate solids. For example, compositions such as gelato and medium to high fat ice cream compositions typically contain about 8% to about 13% starch hydrolysate solids while low fat and non-fat compositions typically contain about 13% to about 18% starch hydrolysate solids.

If the starch hydrolysate solids concentration is above about 25%, an off-flavor can be imparted to the frozen dessert composition. A frozen dessert composition containing more than about 25% starch hydrolysate solids can seem too sweet or chalky. On the other hand, a frozen dessert composition containing less than about 5% starch hydrolysate solids can develop a gritty texture upon long-term storage due to the formation of large ice crystals in the frozen dessert composition.

### Composition of the Starch Hydrolysate

The dextrose content of the starch hydrolysate solids is typically less than about 5%. In some embodiments, the dextrose content is less than about 3% of the starch hydrolysate solids. If the dextrose content is too high, the consumer can experience a burning sensation upon consumption of the frozen dessert composition. For example, a standard corn syrup with a DE value of 25 contains at least 7% of dextrose, a frozen dessert composition containing only 25DE corn syrup will provide the consumer with an undesirable burning sensation upon consumption of the composition. As used herein, the phrases "dextrose equivalent value" or "DE value" refer to a measure of the reducing sugar content calculated as percent dextrose in a corn syrup. Further, if the dextrose content is too high, the freezing point of the frozen dessert composition can be depressed to such an extent that the texture of the frozen dessert can be adversely affected.
The freezing point of a frozen dessert depends on the composition, concentration, and molecular weight of the components of the aqueous phase of the frozen dessert composition. As additional water is frozen during the manufacture and storage of a frozen dessert composition components such as sugars and starch hydrolysates will become concentrated in the remaining unfrozen water, increasing freezing point depression and lowering the freezing point of the aqueous phase. The freezing point depression is inversely proportional to the number of moles of solute in the aqueous phase of the frozen dessert composition. Thus, dextrose, with a molecular weight of 180 g/mole, can depress the freezing point almost twice as much as the same weight of sucrose or maltose with molecular weights of 342 g/mole. Dextrose affects the freezing point of the composition more than any other component of the starch hydrolysate. The amount of water frozen at a given temperature will affect the firmness of the frozen dessert.

The mobility of the water in the frozen dessert composition is a function of the glass transition temperature. As used herein, the phrase "glass transition temperature" refers to the temperature at which the unfrozen matrix of frozen dessert composition is maximally concentrated; it becomes so viscous that there is no more observable ice crystallization within the time frame of the observation. The glass transition temperature of frozen dessert compositions is usually below the normal storage temperature of about -15° F (-26° C). As the storage temperature becomes higher than the glass transition temperature, the mobility of water in the frozen dessert increases. Mobility of water tends to favor the formation of larger ice crystals. High dextrose content tends to favor the mobility of water and the formation of larger ice crystals. To minimize ice crystal growth, the concentration of dextrose in the starch hydrolysate solids is typically less than about 5%.

The maltose content is usually about 20% to about 60 % based on the weight of the starch hydrolysate solids. In some embodiments, the maltose content is from about 35% to about 55 % or from about 45% to about 55 % based on the weight of the starch hydrolysate solids. Maltose has desirably high solubility in water and is less likely than lactose or polysaccharides to precipitate during long-term storage of the frozen dessert composition.

Maltose is less sweet than either dextrose or sucrose and depresses the freezing point less than dextrose. The lower sweetness of maltose allows higher concentrations of maltose to be used in a frozen dessert composition than would be possible with a sweeter material such as sucrose. Thus, maltose can improve the heat shock resistance of the frozen dessert composition without adversely affecting the taste or texture.

The maltotriose content is typically about 5% to about 25% based on the weight of the starch hydrolysate solids. In some embodiments, the starch hydrolysate solids contain maltotriose in an amount of about 10% to about 20% or about 14% to about 16%. Maltotriose is less sweet than maltose and somewhat less soluble in water.

The polysaccharide content is typically about 20% to about 60% based on the weight of the starch hydrolysate solids. In some embodiments, the starch hydrolysate solids contain polysaccharides in an amount of about 35% to about 55% or about 45% to about 55%. If the starch hydrolysate solids contain more than about 60% polysaccharides, the polysaccharides can precipitate from the aqueous phase of the frozen dessert composition during storage and impart a chalky taste to the frozen dessert composition. The polysaccharides can also make the frozen dessert composition undesirably hard and difficult to scoop.

The polysaccharides improve the heat shock resistance of the frozen dessert composition by decreasing the mobility of water in the frozen dessert composition. Decreased water mobility results in decreased ice crystal size during long-term storage of the frozen dessert composition and greater retention of the texture imparted to the composition at the time it was prepared.

### Various embodiments of the starch hydrolysate

The starch hydrolysate solids used in the frozen dessert compositions of the invention typically include dextrose in an amount less than about 5%, maltose in an amount of about 20% to about 60%, maltotriose in an amount of about 5% to about 25%, and polysaccharides in an amount of about 20% to about 60% based on the weight of the starch hydrolysate solids.

In some embodiments, the starch hydrolysate solids includes dextrose in an amount less than about 3%, maltose in an amount of about 35% to about 55 %, maltotriose in an amount of about 10% to about 20%, and polysaccharides in an amount of about 35% to about 55% based on the weight of the starch hydrolysate solids. In other embodiments of the starch hydrolysate solids, the dextrose content is less than about 3%, the maltose content is about 45% to about 55%, the maltotriose content is about 14% to about 16%, and the polysaccharide content is about 45% to about 55% based on the weight of the starch hydrolysate solids.

In one embodiment, the starch hydrolysate is prepared by forming a mixture that includes one or more corn syrups or corn syrup solids having a dextrose equivalent value of about 20 to about 30 with one or more high maltose corn syrups or high maltose corn syrup solids. The starch hydrolysate solids typically are about 40% to about 60 % corn syrup solids and about 40 to about 60 % high maltose corn syrup solids. In some embodiments, the starch hydrolysate solids include about 45% to about 55% corn syrup solids and about 45% to about 55% high maltose corn syrup solids.

High maltose corn syrup is a mixture of dextrose, maltose, maltotriose, and polysaccharides. The concentration of dextrose is typically less than about 3% based on the weight of the high maltose corn syrup solids. In some embodiments, the dextrose is less than about 1% based on the weight of the high maltose corn syrup solids. The maltose content is about 50% to about 73% based on the weight of the high maltose corn syrup solids. In some embodiments, the high maltose corn syrup solids contain about 60% to about 73% maltose. The maltotriose content can be about 12% to about 20% based on the weight of the high maltose corn syrup solids. In some embodiments, the high maltose corn syrup solids contain about 15% to about 20% maltotriose. Polysaccharides are present in an amount less than about 32% based on the weight of the high maltose corn syrup solids. In some embodiments, the high maltose corn syrup solids contain about 8% to about 20% of polysaccharides. The high maltose corn syrup is typically about 70% to about 82% solids.

In some embodiments, the high maltose corn syrup can contain less than about 3% dextrose, about 60% to about 73% maltose, about 15% to about 20% maltotriose, and about 8% to about 20% polysaccharides based on the weight of the maltose corn syrup solids.

The starch hydrolysate can contain corn syrup or corn syrup solids having a DE value of about 20 to about 30. As used herein, the phrases "dextrose equivalent value" or "DE value" refer to a measure of the reducing sugar content calculated as percent dextrose in a corn syrup. A higher DE value corn syrup has been hydrolyzed to a greater extent than one having a lower DE value. Thus, the DE value is a measure of the molecular weight. For example, a 20 DE corn syrup has a higher molecular weight and a lower reducing sugar content compared to a 26 DE corn syrup. Corn syrup typically has about 70% to about 80% solids.

Like high maltose corn syrup, corn syrups contain a mixture of dextrose, maltose, maltotriose, and polysaccharides. For example, corn syrup solids having a DE value of 24 to 26 typically contain less than about 5% dextrose, about 5% to about 15% maltose, about 5% to about 15% maltotriose, and about 70% to about 85% polysaccharide based on the weight of the corn syrup solids. As another example, corn syrup having a DE value of 20 typically contains dextrose in an amount less than about 5%, maltose in an amount of about 5% to about 10%, maltotriose in an amount of about 5% to about 12%, and polysaccharides in an amount of about 75% to about 90% based on the weight of the corn syrup solids.

In this aspect of the invention, the frozen dessert composition can contain about 2% to about 15% high maltose corn syrup solids and about 2% to about 15% corn syrup solids having a dextrose equivalent value of about 20 to about 30.

### Various Embodiments of Frozen Desserts

The frozen dessert composition can contain other ingredients in addition to starch hydrolysate. Suitable ingredients include, for example, sucrose, nonfat milk solids, fat, flavoring, stabilizers or gums, and water.

Water is present in the frozen dessert composition and functions, at least in part, as a solvent or dispersion media for the nonfat milk solids, sucrose, and starch hydrolysate solids. The portion of water that is not frozen provides fluidity for the composition. The portion that freezes forms ice crystals resulting in composition rigidity and the refreshing taste perception characteristic of a frozen dessert composition. The source of water for the frozen dessert composition can be added water or moisture from other fluid ingredients used to supply the nonfat milk solids, sucrose, the starch hydrolysate solids, or the flavorants. The water content is typically about 40% to about 65% by weight of the frozen dessert compositions.

The total solids content is typically about 35% to about 60%. In some embodiments, the total solids content is about 45% to about 55%. As used herein, the term "solids" includes the starch hydrolysate solids, sucrose, nonfat milk solids, fat, flavoring solids, and the like. The solids usually do not exceed an amount that would result in a frozen dessert composition that is so viscous that it cannot be processed or that has a texture that is undesirable. Further, the solids usually do not exceed an amount that prevents adequate hydration and dissolution of the sucrose and starch hydrolysate solids. The solids remain hydrated throughout the typical shelf life of a frozen dessert composition. The shelf life is usually at least six months and, in some embodiments, can be about one year. Sucrose

Broadly, the frozen dessert composition contains the starch hydrolysate in an amount of about 5% to about 25% by weight and sucrose in an amount of about 5% to about 20% by weight. In preferred embodiments, the frozen dessert composition contains about 8% to about 18% by weight starch hydrolysate and about 9% to about 15% sucrose based on the weight of the frozen dessert composition. The sucrose can be, for example, crystalline sucrose, powdered sugar, liquid sugar, or a combination thereof. Nonfat milk solids

The frozen dessert composition can optionally, and in preferred embodiments do, comprise nonfat milk solids in an amount of about 5% to about 20%. In one embodiment, the frozen dessert composition contains starch hydrolysate in an amount of about 5% to about 25 % and nonfat milk solids in an amount of about 5% to about 20%. In some embodiments, the frozen dessert composition contains about 8% to about 14% nonfat milk solids.

In another embodiment, the frozen dessert composition contains starch hydrolysate, sucrose, and nonfat milk solids. The frozen dessert composition contains, for example, starch hydrolysate in an amount of about 5% to about 25 %, sucrose in an amount of about 5% to about 20%, and nonfat milk solids in an amount of about 5% to about 20%. In one example, the frozen dessert composition can contain about 2% to about 15% high maltose corn syrup solids, about 2% to about 15% corn syrup solids having a DE value of about 20 to about 30, about 5% to about 20% sucrose, and about 5% to about 20% nonfat milk solids.

Inclusion of nonfat milk solids increases the ability of the frozen dessert composition to be whipped or aerated and thus better allows for the provision of aerated frozen dessert embodiments herein. Also, the nonfat milk solids increase the viscosity of the aqueous phase, contributing to the smoothness and body in the frozen dessert composition. The increased viscosity tends to reduce water mobility in the frozen dessert composition and thereby decreases the ice crystal growth rate.

The nonfat milk solids can be provided by various milk based ingredients including cream, buttermilk, whole milk, non-fat dry milk, half and half (equal parts cream and milk), and the like. Milk includes, for example, condensed milk, skim milk, condensed skim milk, dried milk, lactose-reduced skim milk, or mixtures thereof. The skim milk can be ultra-filtered to concentrate the protein and reduce the amount of lactose in the milk. Condensed milk usually contains about 32% solids. Ultra-filtered skim milk typically concentrates the protein by a factor of about five ("5X skim milk"). The milk can come from, for example, cows, goats, buffalo, sheep or mixtures thereof.

Some sources of milk solids such as, for example, heavy cream are also high in fat. In some embodiments, such sources cannot provide the desired amounts of nonfat milk solids without being added in combination with another source such as, for example, condensed milk, dried milk protein, nonfat dry milk, casein, or whey.

The nonfat milk solids can include lactose, protein, and minerals such as calcium. The total protein in the frozen dessert composition is typically about 2% to about 8% based on the weight of the frozen dessert composition. A portion of the nonfat milk solids can be substituted with protein derived from sweet dairy whey, neutralized acid whey, modified whey, whey protein concentrate, casein, modified casein, soy flour, modified soy flour, soy protein concentrate, soy, egg protein, peanut flour, peanut protein concentrate, and the like. If the protein concentration is higher than about 6%, however, the composition tends to become too hard.

Lactose is typically introduced into a frozen dessert composition from dairy ingredients and is less sweet than either sucrose or maltose. High amounts of lactose usually are not desirable because the aqueous solubility of lactose is lower than that of either sucrose or maltose. Precipitation of lactose in the frozen dessert composition can impart a gritty, sandy texture to the composition. In some embodiments, lactose reduced dairy ingredients are used to minimize precipitation of lactose during long-term storage of the frozen dessert composition.

The nonfat milk solids, sucrose, and starch hydrolysate solids all contribute to the soft texture of the frozen dessert composition. These ingredients increase the viscosity of the aqueous phase, contributing to the body in the frozen dessert composition. The increased viscosity reduces water mobility and slows ice crystal growth.

### Fat

The present frozen dessert composition typically contains about 0.5% to about 20% fat. In one embodiment, the frozen dessert composition contains starch hydrolysate in an amount of about 5% to about 25% and fat in an amount of about 5% to about 20%.

In other embodiments, the frozen dessert composition contains starch hydrolysate solids, sucrose, nonfat milk solids, and fat. The frozen dessert composition contains, for example, starch hydrolysate solids in an amount of about 5% to about 25%, sucrose in an amount of about 5% to about 20%, nonfat milk solids in an amount of about 5% to about 20%, and fat in an amount of about 0.5% to about 20%. The total solids about 35% to about 60%. The starch hydrolysate can contain about 2% to about 15% corn syrup solids having a DE value of about 20 to about 30 and about 2% to about 15% high maltose corn syrup solids.

The amount of fat varies depending on the composition being prepared and the particular organoleptic properties desired. A low fat composition typically has about 0.5% to about 3 % fat based on the weight of the frozen dessert composition. Sherbet, for example, usually has a fat content of about 1% to about 3%. Gelato typically contains about 4% to about 12 % fat. Economy ice cream can have about 10 to 12 percent fat, premium ice cream can have about 12% to 14% fat, and super premium ice cream can have over 15% fat. The stated amount of fat in these compositions is only exemplary.

The fat constituent can impart a creamy taste and contribute to the body and melting resistance of the frozen dessert composition. Depending on the particular fat chosen, it can also contribute to the amount of nonfat milk solids, flavoring solids, and sweetener in the composition. Dairy cream, butterfat, and milk are typical fat sources but other edible fats and oils can be used. Fats can be contributed from egg yolks and flavorants. Vegetable oils that can be used include, for example, cottonseed oil, soybean oil, corn oil, sunflower oil, palm oil, rice oil, peanut oil, safflower oil, and coconut oil. The oils and fats can be unsaturated, saturated, or partially saturated.

In one embodiment, heavy cream and egg yolks provide the fat source. Heavy cream usually contains about 40% fat and about 45% solids.

Egg yolk can improve the texture, whipping ability, and hardness of the frozen dessert composition. Suitable sources of egg yolk solids include liquid egg yolks, frozen egg yolks, dried egg yolks, liquid whole eggs, frozen whole eggs, dried whole eggs, or a combination thereof. Pasteurized liquid frozen egg yolk is often sold for commercial purposes with about 10% sucrose added. The sucrose improves the stability of eggs when heated, such as when the egg yolks are pasteurized. Egg yolks can help emulsify the other ingredients and include about 20% to about 24% fat, typically about 22% fat. The frozen dessert composition can also contain other suitable emulsifiers such as mono- and diglycerides or polyoxyethylene derivatives of hexahydric alcohols, glycerol and glycol esters such as polysorbate 80.

### Flavorants

The frozen dessert composition can also include flavorants such as, for example, vanilla, chocolate, coffee, fruit, nuts, liqueur, vegetable, tea, and candy. These flavorants can be provided in the form of a powder, puree, paste, syrup, concentrate, extract, alcohol, liquid, solid, or a combination thereof. The flavorants can affect the amount of other ingredients added to the frozen dessert composition. For example, fruit contains fructose, a substance that is sweeter than sucrose. Thus, fructose in fruit can be used to replace part of the sucrose in a formulation. Likewise, some flavorants such as nuts have a high fat content and can be used to replace at least some of the fat added to a formulation.

### Stabilizer

A frozen dessert composition of the invention can optionally contain a stabilizer such as cornstarch or a stabilizing gum to further improve the heat shock resistance. Suitable stabilizing gums include, for example, guar gum, pectin, locust bean, or a mixture thereof. The amount of stabilizer should not be great enough to impart an unnatural taste or texture to the frozen dessert composition. The frozen dessert compositions, for example, can contain an amount of stabilizer up to about 0.2%. In some embodiments the stabilizer is pectin in an amount of about 0.05% to about 0.15% based on the weight of the frozen dessert composition.

### Air

The present frozen dessert compositions include both unaerated and, in preferred form, aerated products. Aeration increases the volume of the frozen dessert composition. The volume increase is known as overrun. To some extent, the amount of overrun is controlled by consumer preference and the various standards for frozen dessert compositions. The overrun is typically no greater than about 100 percent. In some embodiments, the overrun is about 5% to about 40% or about 5% to about 25% based on the volume of the frozen dessert composition. Unaerated products can be prepared by static or quiessently freezing.
Properties of the Frozen Dessert Compositions

The frozen dessert compositions of the invention are smooth. A smooth frozen dessert composition is substantially free of graininess or grittiness. As used herein, "smooth" refers to a composition that lacks precipitated carbohydrates such as lactose and polysaccharides. A composition having precipitated lactose tends to seem sandy whereas a composition having precipitated polysaccharides tends to seem chalky.

The frozen dessert compositions of the invention are stable. As used herein, the term "stable" refers to a frozen dessert composition with a slow ice crystal growth rate at the temperatures typically used for accelerated thermal stress shelf life testing. Ice crystals in stable frozen dessert composition are typically less than 100 micrometers and preferably less than 85 micrometers in equivalent circular diameter as measured by image analysis after 5 weeks at 10°F (-12°C) or 4 days at 20° F (-6.7° C). In some embodiments, the ice crystals are sized between about 20 and 70microns when stored at 20° F (-6.7° C) for 4 days. Stable compositions are typically heat shock resistant.

The frozen dessert compositions of the invention can typically be stored under normal freezer storage conditions for at least six months and still maintain a smooth texture. In some embodiments, the frozen dessert can be stored for about one year and maintain a desirable texture. Further, the frozen dessert compositions of the invention can be stored under normal freezer storage conditions without the precipitation of the starch hydrolysate solids resulting in the appearance of a chalky texture.

The frozen dessert compositions of the invention can, in some embodiments, be significantly softer than typical dessert compositions at normal freezer storage temperatures.
Specific Frozen Dessert Products

Frozen dessert compositions include, for example, ice cream, ice milk, gelato, milk shakes, frozen yogurt, sherbet, pudding, frozen custard, and sorbet. Specific formulations for gelato, traditional ice cream, low fat ice cream, and frozen yogurt are described below.

### Gelato

In one embodiment, the frozen dessert composition is gelato. The gelato composition contains high maltose corn syrup solids in an amount of about 2 to about 15 %, corn syrup solids having a DE value of about 20 to about 30 in an amount of about 2% to about 15%, sucrose in an amount of about 5% to about 20 %, condensed skim milk in an amount of 16% to about 30 %, heavy cream in an amount of about 11 % to about 14%, egg yolk in an amount of about 3 % to about 7 %, and flavorants. The solids are in an amount of about 45% to about 60%.

A frozen dessert composition in this aspect of the invention tends to melt faster and to be more flavorful than traditional ice cream because of the lower fat content. Fat has a tendency to inhibit flavor release when the frozen dessert composition is consumed. Further, the frozen dessert composition in this aspect of the invention has a higher solids content than the about 36% to about 42% solids used in traditional ice creams. The higher solids content tends to reduce the number and size of ice crystals that can form.

### Traditional Ice Cream Composition

In one embodiment, the frozen dessert composition is ice cream. The ice cream composition contains high maltose corn syrup solids in an amount of about 2% to about 15%, corn syrup solids having a DE value of about 20 to about 30 in an amount of about 2% to about 15 %, sucrose in an amount of about 5% to about 20%, condensed skim milk in an amount of 16% to about 30%, heavy cream in an amount of about 30% to about 45%, egg yolk in an amount of about 3% to about 7%, and flavorants. The solids are in an amount of about 35% to about 55%.

### Low Fat Ice Cream Composition

In one embodiment of the frozen dessert composition, the frozen dessert is ice cream. The ice cream composition contains high maltose corn syrup solids in an amount of about 2% to about 15%, corn syrup solids having a DE value of about 20 to about 30 in an amount of about 2% to about 15%, sucrose in an amount of about 5% to about 20%, condensed skim milk in an amount of 30 to about 60 %, heavy cream in an amount of about 1% to about 5%, egg yolk in an amount of about 1% to about 5%, and flavorants. The solids are in an amount of about 35% to about 55%.

### Frozen Yogurt Composition

In one embodiment, the frozen dessert composition is frozen yogurt. The frozen yogurt contains high maltose corn syrup solids in an amount of about 2% to about 15%, corn syrup solids having a DE value of about 20 to about 30 in an amount of about 2% to about 15%, sucrose in an amount of about 5% to about 20%, condensed skim milk in an amount of 30% to about 60%, heavy cream in an amount of about 4% to about 10%, egg yolk in an amount of about 3% to about 7%, yogurt base in the amount of about 5% to about 15%, and flavorants. The solids are in an amount of about 35% to about 55%.

### Method of Making a Frozen Dessert Composition

The invention also provides a method of making the present frozen dessert compositions. A composition is formed that includes starch hydrolysate solids containing dextrose in an amount less than about 5%, maltose in an amount of about 20 to about 60 %, maltotriose in an amount of about 5% to about 25%, and polysaccharides in an amount of about 20% to about 60% based on the weight of the starch hydrolysate solids. The composition is frozen and aerated to produce a frozen dessert composition having an overrun not greater than about 100 percent based on the volume of the composition. In some embodiments, the starch hydrolysate solids are a mixture of a high maltose corn syrup and a corn syrup having a DE value of about 20 to about 30.

The ingredients are mixed at about 100°F (38°C). The mixture is typically pasteurized and then homogenized. Pasteurization can be accomplished using a batch method, high temperature short time method (HTST), or any other suitable method. For example, the mixture can be pasteurized using HTST by heating at about 180° F (82° C) for less than one minute. The mixture can be homogenized according to any suitable method. For example, the mixture can be homogenized in stages such as, for example, a first stage at 1.035 to 0.345 x 10⁴ KPa (1500 psi) and a second stage at (500) psi.

The mixture is typically cooled to less than about 45° F (7° C). In one embodiment, the mixture is cooled to a temperature from about 36° F (2° C) to about 38°F (3°C). After cooling, the mixture is aged. Aging involves holding the mixture for a period of time sufficient to produce the physical changes in protein structure and fat crystallization that result in a more consistent and more easily processed mixture. In some embodiments, the frozen dessert is aged for at least four hours. When desired, other ingredients such as vanilla, condiments, flavoring and coloring are then added and the mixture is stirred until all the ingredients are thoroughly blended.

The mixtures can be processed into semi-frozen solids by cooling the liquid mixture in a freezer at about 17° F (-8° C) to about 25° F (-4° C). In some embodiments, the semi-frozen solids are cooled to about 18°F (-8°C) to about 22°F (-6° C). The mixtures can be agitated or aerated to provide an overrun of no more than about 100 volume percent. In some embodiments, the overrun is no more than about 40 volume percent or no more than about 25 %. In other embodiments, the mixtures can be statically or quiescently frozen without any agitation or aeration.

The aerated mixture can be extruded into containers at about 18°F (-8° C) to 24°F (-4° C). The desserts can be hardened in a -45°F (-43° C) freezer for about 1 to 2 hours prior to warehousing.

It will be apparent to those skilled in the art that many changes can be made in the embodiments described without departing from the scope of the present invention. Thus the scope of the present invention should not be limited to the embodiments described in this application, but only by embodiments described by the language of the claims and the equivalents of those embodiments.

### EXAMPLES

The following examples further describe the various compositions and methods of the invention. The examples are provided for exemplary purposes and facilitate understanding of the invention and should not be considered to limit the invention to the examples.

### Procedure for Preparation of Frozen Dessert Compositions

To prepare frozen dessert samples, a base mixture including ingredients selected from condensed skim milk, water, sucrose, liquid sugar, heavy cream, corn syrup (about 26 DE or about 20 DE), high maltose corn syrup solids (containing about 68% maltose), egg yolk, yogurt base, and pectin were blended and pasteurized. The base mixture was prepared at about 100° F (38°C). Flavors such as instant coffee or cocoa were also blended with the base mixture.

The blended mixture was homogenized and pasteurized by high temperature short time (HTST) pasteurization at about 180° F (82° C) for 90 seconds followed by two-stage homogenization at about 100,000 KPa. (1500 psi) during the first stage and about 30450 KPa. (500) psi during the second stage. The pasteurized mixture was cooled to between about 32° F (0° C) and about 40 °F (4° C). Other flavorants that do not require hydration or pasteurization can be added prior to or after homogenization and pasteurization.

The dessert mixture was held (aged) for about 4-16 hours at about 40° F (4° C), placed into a standard ice cream freezer, agitated to provide an overrun of about 20-40%, and extruded at about 18° F to 24° F (-8° C to -4° C). The mixture was then hardened as rapidly as possible by freezing to at least -10 °F (-23° C). The hardened composition was then stored at a temperature of between about -10°F (-23° C) and about-20° F (-29° C).

### Example 1: Preparation of Gelato Compositions

Three coffee-flavored gelato formulations were prepared. The ingredients are shown in Table 1.

**Table 1: Ingredients of Gelato Compositions:**

| Ingredients | | | Example 1, | Comparative | Comparative |
|---|---|---|---|---|---|
| | | | | Example 1, | Example 2, |
| | | | wt. % | wt. % | wt. % |
| Skim Milk, Condensed, | | | 26.6 | 26.6 | 26.6 |
| Fresh U.S. Grade A | | | | | |
| Ingredient Water | | | 16.4 | 21.4 | 16.9 |
| Sucrose | | | 10.5 | 16.7 | 12.8 |
| Heavy Cream (40% Butterfat) | | | 12.5 | 12.5 | 12.5 |
| 26 DE Corn Syrup | | | 13.5 | | 25.0 |
| High Maltose Corn Syrup | | | 14.4 | | |
| | 20DE Corn Syrup Solids | | | 16.7 | |
| | Egg yolk | | 5.0 | 5.0 | 5.0 |
| Instant coffee | | | 1.0 | 1.0 | 1.0 |
| Pectin (High Methoxy) | | | 0.1 | 0.1 | 0.1 |
| | | TOTAL | 100.00 | 100.0 | 100.0 |

The % data is based on the weight of the gelato compositions. The 26 DE corn syrup was obtained from Minnesota Corn Processors, LLC (Marshall, Minnesota USA). The high maltose corn syrup was obtained from Cerestar USA, Inc. (Hammond, Indiana USA). The 20 DE corn syrup solids were obtained from Grain Processing Corporation (Muscatine Iowa USA). The spray dried instant coffee was obtained from Sara Lee Coffee & Tea, Inc. (Secaucus, New Jersey). The high methoxy pectin was obtained from Danisco Ingredients (St. Joseph, Missouri USA).

The formulation for Example A is within the scope of the claims and contains a starch hydrolysate that is a mixture of high maltose corn syrup solids and corn syrup solids having a DE value of 26. The formulation for Comparative Examples A-1 and A-2 are outside the scope of the claims. Comparative Example 1 contains only 20 DE corn syrup solids as the starch hydrolysate. Comparative Example 2 contains only 26 DE corn syrup solids as the starch hydrolysate.

The compositions of the gelato samples are shown in Table 2:

**Table 2: Gelato compositions**

| Component | Example A, | Comparative | Comparative |
|---|---|---|---|
| | | Example A-1, | Example A-2, |
| | wt. % | wt. % | wt. % |
| Sucrose | 10.5 | 16.7 | 12.8 |
| Dextrose | 1.0 | 0.4 | 1.0 |
| Maltose | 8.4 | 1.2 | 1.5 |
| Maltotriose | 2.9 | 1.4 | 2.1 |
| Polysaccharides | 9.8 | 13.0 | 14.6 |
| Nonfat milk solids | 9.2 | 9.2 | 9.2 |
| Fat | 6.4 | 6.4 | 6.4 |
| Total solids | 49.2 | 49.1 | 50.0 |

The composition of the starch hydrolysate in each gelato composition is shown in Table 3.

**Table 3: Composition of starch hydrolysate in gelato compositions**

| Component | Example A, | Comparative | Comparative |
|---|---|---|---|
| | | Example A-1, | Example A-2, |
| | wt. % | wt. % | wt. % |
| Dextrose | 4.5 | 2.3 | 5.0 |
| Maltose | 38.1 | 7.4 | 8.0 |
| Maltotriose | 13.1 | 9.1 | 11.0 |
| Polysaccharides | 44.3 | 81.2 | 76.0 |

### Example 2: Evaluation of Ice Crystal Size in Gelato Compositions

All water cannot be eliminated from a frozen dessert composition. Ice crystals deliver the desired cold sensation to a consumer's tongue when a frozen dessert composition is consumed. However, if the ice crystals become too large, the consumer detects an undesirable textural characteristic in the frozen dessert composition. The ice crystal size is indicative of the stability or heat shock resistance of a frozen dessert. A desirable frozen dessert composition typically has a ice crystal size less than about 100 microns and preferably less than about 85 microns in equivalent circular diameter as measured by image analysis after 5 weeks at 10° F (-12° C). In some embodiments, the ice crystals are sized between about 20 and 50 microns when stored at 10° F (-12° C) for five weeks. In some embodiments, the ice crystals are sized between about 20 and 85 microns when stored at 20° F (-6.7° C) for 4 days.

To determine ice-crystal size, a sample of each frozen gelato formulation prepared in Example 1 was analyzed under a microscope using image analysis.

Each gelato sample was taken from one inch down in the center of a pint of each gelato sample. A thin layer of the gelato (approximately 1 mm in diameter) was dispersed in mineral oil, which was cooled to at least -20° C, on a glass slide. A cover slip that was cooled to at least -20° C was applied over the sample. An eraser of a pencil that was cooled to at least -20° C was used to press down the cover slip and spread the frozen dessert thinly throughout the mineral oil. When pressing down the cover slip, care was taken not to apply so much pressure that the ice crystals in the sample cracked.

The glass slide was inserted into a thermal microscope stage and tank unit (Physitemp Model TS-4 adapted for ice crystals, Physitemp Instruments Inc., Clifton, New Jersey), and a stream of nitrogen was applied over the stage. The thermal microscope stage was equipped with an immersion cooler (Lauda Model IC-6, Lauda-Konigshofen, Germany), and the sample was maintained at no more than -20 °C.

The sample was viewed through a light microscope configured with a 10x objective. If the ice crystals appeared to be mostly overlapped, then the slide was quickly removed and the cover slip was moved around to further disperse the sample in the mineral oil. When the ice crystals in the sample were not substantially overlapping, a photomicrograph was taken by a Zeiss Microscope Camera, Model MC63A (Carl Zeiss, Inc., New York). The photomicrograph image was processed in a Cambridge Instruments Quantimet 570 image processing and analysis system (Cambridge Instruments, Inc., Illinois), and the image was quantified using the Quantimet 570 program, which calculated the mean-equivalent diameter data of the ice crystals. Preferably photomicrograph data were obtained when at least 50 particles were pictured. Only crystals that were not overlapping or were not touching an edge of the picture were counted in the 50-particle number. Duplicate samples were prepared and analyzed. Calibration of the digitizing equipment was confirmed by digitizing a photograph using a micrometer or standard particles.

The ice crystal size was measured soon after preparation of the gelato and after storage of the gelato for five weeks at +10 °F (-12° C) or 4 days at 20°F (-6.7° C). All the samples had suitable ice crystal size after the storage periods as shown in Table 4.

**Table 4: Ice Crystal Size of Gelato Compositions:**

| WEEK or DAY # | Example A | Comparative | Comparative |
|---|---|---|---|
| | | Example A-1 | Example A-2 |
| | | Ice-Crystal Size (microns) | |
| 0 | 28 | 32 µm | 30 µm |
| 4 day | | | 78 µm |
| 5 week | 40 | 43 µm | |

### Example 3: Texture of Gelato Compositions

Chalkiness can be identified using sensory evaluation and is attributable to crystallization of the starch hydrolysate over time. The crystals precipitate from the aqueous phase when not enough water is available to hydrate or dissolve the starch hydrolysate.

The chalkiness of the gelato samples prepared in Example 1 were compared using sensory evaluation. The chalkiness was evaluated soon after preparation of the gelato compositions and then again after storage of the gelato for five weeks at +10 °F (-12°C). The sensory evaluation is shown in Table 5.

**Table 5: Chalkiness in Gelato Compositions**

| WEEK # | Example A | Comparative | Comparative |
|---|---|---|---|
| | | Example A-1 | Example A-2 |
| | | Chalkiness (sensory evaluation) | |
| 0 | none | none | none |
| 5 | none | moderate | high |

The Comparative Examples, containing either DE 20 or DE 26 corn syrup solids as the starch hydrolysate, were chalky after storage for 5 weeks. In contrast, Example A, prepared from a starch hydrolysate containing high maltose corn syrup solids and DE 26 corn syrup solids, did not seem chalky under the same storage conditions.

Thus, even though, as shown in Example 2, the ice crystal size of the Comparative Examples is suitable after 5 weeks of storage at +10 °F (-12 °C), the texture was not suitable. The Comparative Examples became chalky over time.

### Example 4: Preparation and Evaluation of Ice Cream

Ice cream samples were prepared as shown in Table 6. Example B was within the scope of the claims and includes a starch hydrolysate containing high maltose corn syrup and 26 DE corn syrup. Comparative Example B-1 was not within the scope of the claims and did not include a starch hydrolysate.

**Table 6: Ingredients of Ice Cream Compositions**

| Ingredient | | Comparative | Example B, |
|---|---|---|---|
| | | Example B-1, | |
| | | wt. % | wt. % |
| Cream (40% fat) | | 36.8 | 36.8 |
| Condensed skim milk | | 20.9 | 20.9 |
| Liquid sucrose (67.5% sucrose) | | 21.4 | 13.9 |
| Water | | 12.4 | 5.4 |
| Yolk and sucrose | | 4.9 | 4.9 |
| 26 DE corn syrup and liquid sucrose | | | 7.0 |
| (70/30 blend) | | | |
| 65% high maltose corn syrup | | | 7.5 |
| Cocoa (21% fat) | | 3.6 | 3.6 |
| | TOTAL | 100 | 100 |

The compositions of the ice cream compositions are shown in Table 7.

**Table 7: Composition of Ice Cream**

| Component | Comparative | Example B, |
|---|---|---|
| | Example B-1, | |
| | wt. % | wt. % |
| Sucrose | 14.4 | 10.8 |
| Dextrose | 0 | 0.4 |
| Maltose | 0 | 4.2 |
| Maltotriose | 0 | 1.3 |
| Polysaccharides | 0 | 3.8 |
| Nonfat milk solids | 12.7 | 12.8 |
| Fat | 16.7 | 16.7 |
| Total solids | 43.8 | 50.0 |

The compositions of the starch hydrolysate used in the ice cream compositions are shown in Table 8.

**Table 8: Composition of Starch Hydrolysate in Ice Cream**

| Component | Comparative | Example B, |
|---|---|---|
| | Example B-1, | |
| | wt. % | wt. % |
| Dextrose | 0 | 4.4 |
| Maltose | 0 | 43.1 |
| Maltotriose | 0 | 13.5 |
| Polysaccharides | 0 | 39.0 |

The ice crystal size was measured soon after preparation of the ice creams and after storage of the ice cream for 4 days at 20°F (-6.7°C). Both samples had suitable ice crystal size after 4 days as shown in Table 9

**Table 9: Ice Crystal Size of Ice Cream Compositions**

| DAY # | Comparative Example | Example B |
|---|---|---|
| | B-1 | |
| | Ice Crystal Size (microns) | |
| 0 | 29 µm | 32 µm |
| 4 | 58 µm | 61 µm |

The softness of the ice creams was evaluated using a penetrometer. The penetrometer measures the penetration depth of a metal cone into the product under controlled conditions. Samples were tempered for at least one day at 10°F (-12°C). The penetrometer (Catalog #73515 from Precision Instruments, Bellwood, IL) was set up with an automated five second drop. The testing method is described as AOCS Method Cc 16-60, Cone Penetration with the Standard Grease Cone. For frozen desserts the test was performed in a 10°F (-12°C) walk-in freezer. Six to ten replicate measurements were taken per pint of product and the mean penetration depth is reported in Table 10. The greater penetration depth (higher value) indicates a softer ice cream.

**Table 10: Softness of Ice Cream Compositions**

| Comparative Example | Example B |
|---|---|
| B-1 | |
| Penetration Depth, millimeters (mm) | |
| 10.1 | 18.7 |

The ice creams were evaluated organoleptically for chalkiness after 5 weeks storage at 10°F (-12°C). No chalkiness was seen in either sample.

Ice cream (Example B) prepared from a starch hydrolysate containing high maltose corn syrup solids and 26DE corn syrup solids was significantly softer than the comparative ice cream prepared with sucrose.

Thus, even though, as shown in Table 9, the ice crystal size of the Comparative Example was suitable after 4 days of storage at 20°F (-6.7°C) and there was no chalkiness observed, the texture was less desirable because it was harder. Ice cream prepared according to the invention has a softer texture and stability equal to the harder comparative sample.

### Example 5: Preparation and Evaluation of Frozen Yogurt Compositions

Frozen yogurt compositions were prepared as shown in Table 11. Example C was within the scope of the claims and included a starch hydrolysate containing high maltose corn syrup and 26 DE corn syrup. Comparative Example C-1 was not within the scope of the claims and included a starch hydrolysate containing only 26 DE corn syrup.

**Table 11: Ingredients of Frozen Yogurt Compositions**

| Ingredient | Comparative | Example C, |
|---|---|---|
| | Example C-1, | |
| | wt. % | wt. % |
| Cream (40% fat) | 6.2 | 6.2 |
| 5X Ultafiltered / condensed skim milk | 45.4 | 45.4 |
| (73/27 blend) | | |
| Sucrose | 14.6 | 12.7 |
| Water | 6.4 | 6.4 |
| Yolk and sucrose | 4.0 | 4.0 |
| 26 DE corn syrup and liquid sucrose (70/30 | 7.7 | 6.1 |
| blend) | | |
| 65% high maltose corn syrup | 0 | 6.5 |
| Yogurt base | 12.0 | 12.0 |
| Cocoa (21 % fat) | 3.7 | 3.7 |
| TOTAL | 100 | 100 |

In one embodiment, a yogurt base mix is prepared by mixing and homogenizing a condensed skim milk and water, pasteurizing the mix at 180°F for 30 seconds and then holding the mix at about 160°F-180°F for 30 minutes. Thereafter, the homogenized and pasteurized yogurt mix is inoculated with a desired starter culture, usually a yogurt starter culture includes a combination of *Lactobacillus bulgaricus* and *Streptococcus thermophilus*. In other variations, the yogurt culture can additionally include a *Lactobacillus bifidus* and/or a *Lactobacillus acidophilus* bacteria. The yogurt culture can be added to the yogurt mix at a temperature of about 104°F to about 106°F (40°C to 41°C). The yogurt mix is thereafter fermented for about 4 to 6 hours to achieve a final titratable acidity of the yogurt of about 1.4% to 1.6%.

The compositions of the frozen yogurt compositions are shown in Table 12.

**Table 12: Composition of Frozen Yogurt**

| Component | Comparative | Example C, |
|---|---|---|
| | Example C-1, | |
| | wt. % | wt. % |
| Sucrose | 16.2 | 14.0 |
| Dextrose | 0.2 | 0.4 |
| Maltose | 0.3 | 3.7 |
| Maltotriose | 0.5 | 1.2 |
| Polysaccharides | 3.2 | 3.3 |
| Nonfat milk solids | 17.7 | 17.7 |
| Fat | 4.4 | 4.4 |
| Total solids | 42.5 | 44.7 |

The compositions of the starch hydrolysate in the frozen yogurt compositions are shown in Table 13.

**Table 13: Composition of Starch Hydrolysate in Frozen Yogurt**

| Component | Comparative | Example C, |
|---|---|---|
| | Example C-1, | |
| | wt. % | wt. % |
| Dextrose | 5.0 | 4.4 |
| Maltose | 8.0 | 43.1 |
| Maltotriose | 11.0 | 13.5 |
| Polysaccharides | 76.0 | 39.0 |

The ice crystal size was measured soon after preparation of the frozen yogurts and after storage of the frozen yogurt for 4 days at 20°F (-6.7°C). Both samples had suitable ice crystal sizes after 4 days as shown in Table 14.

**Table 14: Ice Crystal Size of Frozen Yogurt Compositions**

| DAY # | Comparative Example | Example C |
|---|---|---|
| | C-1 | |
| | Ice Crystal Size (microns) | |
| 0 | 33 | 27 |
| 4 | 68 | 69 |

The softness of the frozen yogurts was evaluated using a penetrometer. The mean penetration depth is reported in Table 15.

**Table 15: Softness of Frozen Yogurt Compositions**

| Comparative Example | Example C |
|---|---|
| C-1 | |
| Penetration Depth, millimeters (mm) | |
| 11.4 | 18.6 |

The frozen yogurts were evaluated organoleptically for chalkiness after 5 weeks storage at 10°F (-12°C). No chalkiness was seen in either sample.

Frozen yogurt (Example C) prepared from a starch hydrolysate containing high maltose corn syrup and 26DE corn syrup was significantly softer than the comparative frozen yogurt prepared with only the high molecular weight starch hydrolysate.

Thus, even though, as shown in Table 14, the ice crystal size of the Comparative Example was suitable after 4 days of storage at 20°F (-6.7°C) and no chalkiness was observed, the texture was less desirable because it was harder. Frozen yogurt prepared according to the invention has a softer texture and stability equal to the harder comparative sample.

### Example 6: Preparation and Evaluation of Low Fat Ice Cream Compositions

Low fat ice cream compositions were prepared as shown in Table 13. Example D was within the scope of the claims and contained a starch hydrolysate that includes high maltose corn syrup and 26 DE corn syrup. Comparative Example D-1 was not within the scope of the claims and included a starch hydrolysate that contained both 26 DE corn syrup and 20 DE corn syrup solids.

**Table 16: Ingredients of Low Fat Ice Cream Compositions**

| Ingredient | | Comparative | Example D, |
|---|---|---|---|
| | | Example D-1, | |
| | | wt. % | wt. % |
| Cream (40% fat) | | 3.2 | 3.2 |
| Condensed skim milk | | 5.6 | 5.6 |
| 5X ultrafiltered / condensed skim milk (73/27 blend) | | 45.0 | 45.0 |
| Liquid sucrose (67.5%) | | 6.1 | 4.5 |
| Water | | 9.7 | 11.3 |
| Yolk and sucrose | | 2.0 | 2.0 |
| 20 DE corn syrup solids | | 4.3 | 0 |
| 26 DE corn syrup and liquid sucrose (70/30 blend) | | 20.1 | 11.8 |
| 65% high maltose corn syrup | | 0 | 12.6 |
| Pectin | | 0.1 | 0.1 |
| Cocoa (21% fat) | | 3.7 | 3.7 |
| Vanilla | | 0.2 | 0.2 |
| | TOTAL | 100 | 100 |

The compositions of the low fat ice cream compositions are shown in Table 17.

**Table 17: Composition of Low Fat Ice Cream**

| Component | Comparative | Example D, |
|---|---|---|
| | Example D-1, | |
| | wt. % | wt. % |
| Sucrose | 8.2 | 5.5 |
| Dextrose | 0.6 | 0.7 |
| Maltose | 1.2 | 7.2 |
| Maltotriose | 1.6 | 2.2 |
| Polysaccharides | 11.6 | 6.5 |
| Nonfat milk solids | 16.4 | 16.5 |
| Fat | 2.7 | 2.7 |
| Total solids | 42.3 | 41.3 |

The compositions of the starch hydrolysate in the low fat ice cream compositions are shown in Table 18.

**Table 18: Composition of Starch Hydrolysate in Low Fat Ice Cream**

| Component | Comparative | Example D, |
|---|---|---|
| | Example D-1, | |
| | wt. % | wt. % |
| Dextrose | 4.3 | 4.4 |
| Maltose | 7.8 | 43.1 |
| Maltotriose | 10.5 | 13.5 |
| Polysaccharides | 77.4 | 39.0 |

The ice crystal size was measured soon after preparation of the low fat ice creams and after storage of the low fat ice cream for 4 days at 20°F (-6.7°C). Both samples had suitable ice crystal size after 4 days as shown in Table 19.

**Table 19: Ice Crystal Size of Low Fat Ice Cream Compositions**

| DAY # | Comparative Example | Example D |
|---|---|---|
| | D-1 | |
| | Ice Crystal Size (microns) | |
| 0 | 29 | 30 |
| 4 | 63 | 67 |

The softness of the low fat ice creams was evaluated using a penetrometer. The mean penetration depth is reported in Table 20.

**Table 20: Softness of Low Fat Ice Cream Compositions**

| Comparative Example | Example C |
|---|---|
| D-1 | |
| Penetration Depth, millimeters (mm) | |
| 9.7 | 14.4 |

The low fat ice creams were evaluated organoleptically for chalkiness after 5 weeks storage at 10°F (-12°C). No chalkiness was seen in either sample.

Low fat ice cream (Example D) prepared from a starch hydrolysate containing high maltose corn syrup and 26DE corn syrup was significantly softer than the comparative frozen yogurt prepared with only the high molecular weight starch hydrolysates.

Thus, even though, as shown in Table 19, the ice crystal size of the Comparative Example was suitable after 4 days of storage at 20°F (-6.7°C) and no chalkiness was observed, the texture was less desirable because it was harder. Low fat ice cream prepared according to the invention has a softer texture and stability equal.

## Claims

1. A frozen dessert composition, comprising:
(a) a starch hydrolysate solids in an amount of 5 % to 25 %, the starch hydrolysate solids comprising
(i) dextrose in an amount less than 5 % based on the weight of the starch hydrolysate solids;
(ii) maltose in an amount of 20 % to 60 % based on the weight of the starch hydrolysate solids;
(iii) maltotriose in an amount of 5 % to 25 % based on the weight of the starch hydrolysate solids;
(iv) polysaccharides in an amount of 20 % to 60 % based on the weight of the starch hydrolysate solids;
(b) sucrose in an amount of 5 % to 20 % based on the weight of the frozen dessert composition;
(c) non-fat milk solids in an amount of 5 % to 20 % based on the weight of the frozen dessert composition; and
(d) fat in an amount of 0.5 % to 20 % based on the weight of the frozen dessert composition.

2. The frozen dessert composition of claim 1, wherein the starch hydrolysate solids is a mixture comprising high maltose corn syrup and a corn syrup having a dextrose equivalent value of 20 to 30.

3. The frozen dessert composition of claims 1 or 2, wherein the frozen dessert composition has an overrun not greater than 100 volume percent, preferably not greater than 50 volume percent, more preferably riot greater than 40 volume percent, and still more preferably not greater than 25 volume percent.

4. The frozen dessert composition of claims 1 to 3, wherein the frozen dessert composition has ice crystals less than 100 micrometers in equivalent circular diameter after storage for five weeks at 10 °F (-12 °C).

5. The frozen dessert composition of claims 1 to 4, wherein the starch hydrolysate solids remains hydrated after storage for five weeks at 10 °F (-12 °C).

6. The frozen dessert composition of claims 1 to 5, wherein the frozen dessert is ice cream, gelato, sorbet, or sherbet.

7. A sweetened, aqueous food product suitable for preparing a frozen aerated dairy dessert product comprising the starch hydrolysate solids of claim 1, component (a).

8. The food product of claim 7 in fluid form having a temperature of 0 °C to 5°C.

## Patentansprüche

1. Gefrorene Dessertzusammensetzung, umfassend:
(a) Stärkehydrolysat-Feststoffe in einer Menge von 5 % bis 25 %, wobei die Stärkehydrolysat-Feststoffe folgendes umfassen:
(i) Dextrose in einer Menge von weniger als 5 %, basierend auf dem Gewicht der Stärkehydrolysat-Feststoffe;
(ii) Maltose in einer Menge von 20 % bis 60 %, basierend auf dem Gewicht der Stärkehydrolysat-Feststoffe;
(iii) Maltotriose in einer Menge von 5 % bis 25 %, basierend auf dem Gewicht der Stärkehydrolysat-Feststoffe;
(iv) Polysaccharide in einer Menge von 20 % bis 60 %, basierend auf dem Gewicht der Stärkehydrolysat-Feststoffe;
(b) Saccharose in einer Menge von 5 % bis 20 %, basierend auf dem Gewicht der gefrorenen Dessertzusammensetzung;
(c) Milchfeststoffe, die kein Fett sind, in einer Menge von 5 % bis 20 %, basierend auf dem Gewicht der gefrorenen Dessertzusammensetzung; und
(d) Fett in einer Menge von 0,5 % bis 20 %, basierend auf dem Gewicht der gefrorenen Dessertzusammensetzung.

2. Gefrorene Dessertzusammensetzung nach Anspruch 1, bei der die Stärkehydrolysat-Feststoffe eine Mischung ist, die Maissirup mit hohem Maltoseanteil und einen Maissirup mit einem Dextrose-Äquivalenzwert von 20 bis 30 umfasst.

3. Gefrorene Dessertzusammensetzung nach Anspruch 1 oder 2, bei der die gefrorene Dessertzusammensetzung einen Überschuss von nicht mehr als 100 Volumenprozent aufweist, bevorzugt nicht mehr als 50 Volumenprozent, stärker bevorzugt nicht mehr als 40 Volumenprozent und noch stärker bevorzugt nicht mehr als 25 Volumenprozent.

4. Gefrorene Dessertzusammensetzung nach den Ansprüchen 1 bis 3, bei der die gefrorenen Dessertzusammensetzung nach Lagerung für fünf Wochen bei 10 °F (-12 °C) Eiskristalle entsprechend einem Kreisdurchmesser von weniger als 100 Mikrometer aufweist.

5. Gefrorene Dessertzusammensetzung nach den Ansprüchen 1 bis 4, bei der die Stärkehydrolysat-Feststoffe nach Lagerung für fünf Wochen bei 10 °F (-12 °C) hydratisiert verbleiben.

6. Gefrorene Dessertzusammensetzung nach den Ansprüchen 1 bis 5, bei der das gefrorene Dessert Eiscreme, Speiseeis, Fruchteis oder Sorbet ist.

7. Gesüßtes, wässriges Lebensmittelprodukt, geeignet zum Herstellen eines gefrorenen, mit Luft durchsetzten Milchdessertprodukts, umfassend die Stärkehydrolysat-Feststoffe aus Anspruch 1, Komponente (a).

8. Lebensmittelprodukt nach Anspruch 1 in flüssiger Form mit einer Temperatur von 0 °C bis 5°C.

## Revendications

1. Composition de dessert glacé comprenant :
(a) de l'extrait sec d'hydrolysat d'amidon en une quantité de 5 % à 25 %, l'extrait sec d'hydrolysat d'amidon comprenant
(i) du dextrose en une quantité inférieure à 5 % par rapport au poids de l'extrait sec d'hydrolysat d'amidon ;
(ii) du maltose en une quantité de 20 % à 60 % par rapport au poids de l'extrait sec d'hydrolysat d'amidon ;
(iii) du maltotriose en une quantité de 5 % à 25 % par rapport au poids de l'extrait sec d'hydrolysat d'amidon ;
(iv) des polysaccharides en une quantité de 20 % à 60 % par rapport au poids de l'extrait sec d'hydrolysat d'amidon ;
(b) du saccharose en une quantité de 5 % à 20 % par rapport au poids de la composition de dessert glacé ;
(c) de l'extrait sec de lait écrémé en une quantité de 5 % à 20 % par rapport au poids de la composition de dessert glacé ; et
(d) des matières grasses en une quantité de 0,5 % à 20 % par rapport au poids de la composition de dessert glacé.

2. Composition de dessert glacé selon la revendication 1, dans laquelle l'extrait sec d'hydrolysat d'amidon est un mélange comprenant du sirop de maïs à forte teneur en maltose et du sirop de maïs ayant un indice équivalent de dextrose de 20 à 30.

3. Composition de dessert glacé selon la revendication 1 ou 2, laquelle composition de dessert glacé a un foisonnement non supérieur à 100 % en volume, de préférence non supérieur à 50 % en volume, mieux encore non supérieur à 40 % en volume, et plus particulièrement non supérieur à 25 % en volume.

4. Composition de dessert glacé selon les revendications 1 à 3, laquelle composition de dessert glacé a des cristaux de glace ayant un diamètre circulaire équivalent inférieur à 100 micromètres après cinq semaines de stockage à -12°C (10°F).

5. Composition de dessert glacé selon les revendications 1 à 4, dans laquelle l'extrait sec d'hydrolysat d'amidon reste hydraté après cinq semaines de stockage à -12°C (10°F) .

6. Composition de dessert glacé selon les revendications 1 à 5, dans laquelle le dessert glacé est une crème glacée, une glace au lait, un sorbet, ou un sorbet au lait.

7. Produit alimentaire aqueux sucré convenant pour la préparation d'un produit de dessert lacté aéré glacé comprenant l'extrait sec d'hydrolysat d'amidon de la revendication 1, composant (a).

8. Produit alimentaire selon la revendication 7 sous forme fluide ayant une température de 0°C à 5°C.
